(19) Europäisches Patentamt
European Patent Office
Office européen des brevets

(11) EP 2 505 606 B1

(12) **EUROPEAN PATENT SPECIFICATION**

(45) Date of publication and mention of the grant of the patent:
**01.03.2017 Bulletin 2017/09**

(51) Int Cl.:
***C08L 23/10*** *(2006.01)*

(21) Application number: **12161629.6**

(22) Date of filing: **28.03.2012**

# (54) POLYOLEFIN COMPOSITION FOR PIPE SYSTEMS

POLYOLEFINZUSAMMENSETZUNG FÜR LEITUNGSSYSTEME

COMPOSITION DE POLYOLÉFINE POUR DES CIRCUITS DE CANALISATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2011 US 201161469466 P**
**29.03.2011 EP 11160147**

(43) Date of publication of application:
**03.10.2012 Bulletin 2012/40**

(73) Proprietor: **Basell Poliolefine Italia S.r.l.**
**20127 Milano (IT)**

(72) Inventors:
- **Marzolla, Roberta**
**45030 Occhiobello (IT)**
- **Galvan, Monica**
**45030 S.Maria Maddalena (RO) (IT)**

(74) Representative: **Sacco, Marco**
**Basell Poliolefine Italia S.r.l.**
**Intellectual Property**
**P.le Donegani, 12**
**44122 Ferrara (IT)**

(56) References cited:
**EP-A1- 1 724 289**
**EP-A1- 2 145 923**
**US-A1- 2008 214 704**
**US-A1- 2009 304 968**
**US-A1- 2010 021 666**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 505 606 B1

## Description

The present invention relates to a polyolefin compositions suitable to produce pipe systems, to a process for preparing such compositions and to pipe systems comprising such compositions.
Pipes made of polymeric material are frequently used for various purposes such as fluid transport, i.e. transport of liquids and gases. The fluid may be pressurized, e.g. when transporting natural gas or tap water, or non-_pressurized, e.g. when transporting sewage (waste-_water), drainage, for storm water applications or indoor sewage (soil and waste discharge). Moreover, the transported fluid may have varying temperature, usually within the range of 0°C to 50°C.
Polypropylene-based polymers have many characteristics which make them suitable for applications like pipes.
In general, polypropylene_based materials to be chosen for pipe applications should result in products of high stiffness as well as high durability while still maintaining good processability.
The European Patent EP1724289, for instance, discloses a polymer composition particularly suitable for pipe applications comprising:

i) a propylene homopolymer,
ii) a propylene random copolymer having an amount of olefin comonomer units, preferably ethylene, of 0.2 to 5.0 wt% and
iii) an elastomeric copolymer of propylene and at least one olefin comonomer, preferably ethylene;

the polymer composition having a tensile modulus of at least 1200 MPa.
Pipe systems according to the above mentioned document show a very high burst pressure resistance which provides pipes with high durability. The drawback related to said systems is the low impact resistance expressed by the low values of IZOD test, particularly at low temperatures.
It is an object of the present invention to provide polyolefin compositions showing fine-tuned values of tensile modulus and flexural modulus and having good impact resistance in particular at low temperatures. A good impact resistance is critical because this property is associated with workability and handling of the pipes during installation.
US 2009/304968 relates to a composition comprising an heterophasic copolymer and a filler. The composition exhibits an high unthreading strength, while retaining high stiffness and good impact resistance.
US 2010/021666 relates to a composition comprising:

1) a copolymer of propylene and 1-hexene;
2) a propylene polymer selected from propylene homopolymer and a polymer of propylene with 0.1-10% of a a-olefin
3) copolymer of ethylene with a $C_3$ -$C_{10}$ alpha-olefin and optionally a diene, having an ethylene content ranging from 15 to 60% wt.

This composition provides polyolefin pipe systems with an optimal balance between resistance properties, in particular good impact resistance at low temperature, without decreasing stiffness, and good burst pressure resistance.
US2008/214704 relates to a polymer composition comprising:

(i) a polypropylene-based matrix which comprises at least one polypropylene random copolymer prepared by copolymerization of propylene with an olefin comonomer, wherein the amount of olefin comonomer units within the matrix is from 0.2 wt % to 5.0 wt %, based on the weight of the polypropylene-based matrix, and
(ii) an elastomeric copolymer of propylene and at least one olefin comonomer,

This composition provides pipe systems with an improved durability, workability and handling.
EP2145923 relates to a heterophasic polymer composition, comprising:

- a matrix comprising a propylene homopolymer and/or a propylene copolymer having an amount of comonomer units of less than 1.0 wt%,
- an elastomeric polypropylene which is dispersed within the matrix and comprises comonomer units derived from ethylene and/or a $C_4$ to $C_{12}$ alpha-olefin.

This composition is useful for the preparation of a pipe of high stiffness while simultaneously keeping low temperature impact strength on an acceptable level Pipes based on materials having low impact resistance values become not workable and their handling is difficult when the temperature is lower than 10°C, that is very common during the cold seasons in most of the countries.
The polyolefin composition according to claims 1 to 6 of the present invention comprises:

A) from 80 wt% to 97 wt%, preferably from 84 wt% to 92 wt%, more preferably from 86 wt% to 90 wt% of a propylene polymer composition comprising:

i) from 50 wt% to 70 wt%, preferably from 55 wt% to 65 wt%, more preferably from 57 wt% to 63 wt% of a propylene homopolymer ; and
ii) from 30 wt% to 50 wt%, preferably from 35 wt% to 45 wt%, more preferably from 37 wt% to 43 wt% of a propylene-ethylene copolymer, the sum i)+ii) being 100;

said propylene polymer composition A) having;

a) a total content of ethylene derived units referred to the sum of the propylene homopolymer i) and the propylene-ethylene copolymer ii) comprised between 0.1 wt% and 3.0 wt% extremes included, preferably between 0.1 wt% and 2.0 wt%, more preferably between 0.1 wt% and 0.8 wt%;
b) a xylene soluble fraction at 25°C (XS) less than 3.0 wt%, preferably less than 2.5 wt%; and
c) a Polydispersity Index (P.I.) having a value comprised between 4.0 and 8.0, preferably between 4.1 and 6.0, more preferably between 4.2 and 4.9;

B) from 3 wt% to 20 wt% preferably from 8 wt% to 16 wt%; more preferably from 10 wt% to 14 wt% of a propylene-ethylene copolymer having a content of ethylene derived units comprised from 42 wt% to 60 wt%, preferably from 43 wt% to 55 wt% more preferably from 45 wt% to 52 wt%;
the sum A) + B) being 100
said polyolefin composition having:

a) an intrinsic viscosity of the xylene soluble fraction (XSIV) ranging from 3 to 6 dl/g;
b) a Melt Flow Rate value (MFR, 230°C 5kg) ranging from 0.01 to 5 g/10 min; preferably from 0.3 to 1 g/10 min; and
c) satisfies the following relation:

$$y \leq -0.061x + 2.19$$

wherein y= XS*$C_2$(A) and

$$x = C_2(B)/C_2(A+B);$$

$C_2$(A) being the amount of ethylene derived units in A) wt%; $C_2$(B) the content of ethylene in the copolymer B) wt%, $C_2$(A+B) the total content of ethylene derive units referred to the sum of A) and B) wt%, and XS the xylene solubility fraction at 25°C of propylene polymer A).

In a preferred embodiment of the invention the propylene polymer composition satisfies the following relation:

$$y \leq -0.061x + 2.01$$

From the above definitions it is evident that the term "copolymer" includes polymers containing only two kinds of comonomers.
For Polydispersity Index is intended the rheological measurement of the Molecular Weight Distribution determined as described below.
Moreover, the compositions of the present invention preferably are endowed with some or all of these properties:

- a Flexural Modulus comprised between 900 MPa and 2000 MPa; preferably from 1000 MPa to 1500 MPa; even more preferably from 1200 MPa to 1500 MPa;
- a Tensile Modulus comprised between 900 and 1500 MPa, preferably comprised between 1100 and 1450 MPa.

Values too low of flexural modulus and tensile modulus provide pipes having not enough rigidity to be used, on the other side, values too high of flexural and tensile modulus, in particular higher than 1500 MPa, provide pipes having low impact resistance and therefore insufficient workability.

- Izod impact strength measured at 23°C higher than 40 kJ/$m^2$, preferably comprised between 45 and 80 kJ/$m^2$; more preferably between 60 and 70 kJ/$m^2$;
- Izod impact strength measured at 0°C higher than 10 kJ/$m^2$, preferably comprised between 15 and 50 kJ/$m^2$; more preferably between 22 and 40 kJ/$m^2$;
- Izod impact strength measured at -20°C higher than 8 kJ/$m^2$, preferably comprised between 9 and 20 kJ/$m^2$; more preferably between 10 and 18 kJ/$m^2$;
- Notched impact strength measured at -20°C higher than 5 kJ/$m^2$, preferably comprised between 6 and 20 kJ/$m^2$; more preferably between 7 and 15 kJ/$m^2$;
- a value of elongation at yield ranging from 5% to 20%, preferably from 10% to 25% measured according to IS0 method 527;
- a value of stress at yield higher than 20 MPa, preferably comprised between 25 and 35 MPa.

The polyolefin composition of the present invention can be prepared by sequential polymerization in at least two stages, with each subsequent polymerization stage being conducted in the presence of the polymeric material formed in the immediately preceding polymerization reaction, wherein the copolymer (A) is normally prepared in at least one first polymerization stage and the copolymer (B) is normally prepared in at least one second polymerization stage.
Therefore, according to another object, the present invention provides a process according to claim 7 for the preparation of the polyolefin composition describe above wherein the copolymer (A) is prepared in at least one first polymerization stage and the copolymer (B) is prepared in at least one second polymerization stage.
Preferably, each polymerization stage is carried out in presence of a highly stereospecific heterogeneous Ziegler-Natta catalyst. The Ziegler-Natta catalysts suitable for producing the propylene polymer compositions of the invention comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound. Suitable catalysts systems are described in the European patents EP45977, EP361494, EP728769, EP 1272533 and in the international patent application WO00163261. Preferably, the solid catalyst component comprises Mg, Ti, halogen and an electron donor selected from succinates of formula (I):

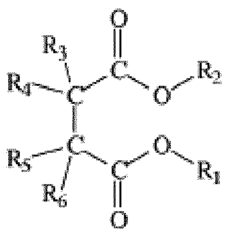

(I)

wherein the radicals $R^1$ and $R^2$, equal to or different from each other, are a $C_1$-$C_{20}$ linear or branched alkyl, alkenyl, cycloalkyl, aryl, arylalkyl or alkylaryl group, optionally containing heteroatoms belonging to groups 15-17 of the periodic table; the radicals $R^3$ to $R^6$ equal to or different from each other, are hydrogen or a $C_1$-$C_2$ linear or branched alkyl, alkenyl, cycloalkyl, aryl, arylalkyl or alkylaryl group, optionally containing heteroatoms, and the radicals $R^3$ to $R^6$ which are joined to the same carbon atom can be linked together to form a cycle.
$R^1$ and $R^2$ are preferably $C_1$-$C_8$ alkyl, cycloalkyl, aryl, arylalkyl and alkylaryl groups. Particularly preferred are the compounds in which $R^1$ and $R^2$ are selected from primary alkyls and in particular branched primary alkyls. Examples of suitable $R^1$ and $R^2$ groups are methyl, ethyl, n-propyl, n-butyl, isobutyl, neopentyl, 2-ethylhexyl. Particularly preferred are ethyl, isobutyl, and neopentyl.
One of the preferred groups of compounds described by the formula (I) is that in which $R^3$ to $R^5$ are hydrogen and $R^6$ is a branched alkyl, cycloalkyl, aryl, arylalkyl and alkylaryl radical having from 3 to 10 carbon atoms. Another preferred group of compounds within those of formula (I) is that in which at least two radicals from $R^3$ to $R^6$ are different from hydrogen and are selected from $C_1$-$C_{20}$ linear or branched alkyl, alkenyl, cycloalkyl, aryl, arylalkyl or alkylaryl group, optionally containing heteroatoms belonging to groups. Particularly preferred are the compounds in which the two radicals different from hydrogen are linked to the same carbon atom. Furthermore, also the compounds in which at least two radicals different from hydrogen are linked to different carbon atoms, that is $R^3$ and $R^5$ or $R^4$ and $R^6$ are particularly preferred.
According to a preferred method, the solid catalyst component can be prepared by reacting a titanium compound of formula $Ti(OR)_{n-y}X_y$ where n is the valence of titanium and y is a number between 1 and n, preferably TiC4, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical

form by mixing alcohol and magnesium chloride in the presence of an inert hydrocarbon immiscible with the adduct, operating under stirring conditions at the melting temperature of the adduct (100-130 "C). Then, the emulsion is quickly quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130 °C and kept at this temperature for 0.5-2 hours. The treatment with Tic4 can be carried out one or more times. The internal donor can be added during the treatment with $TiCl_4$ and the treatment with the electron donor compound can be repeated one or more times. Generally, the succinate of formula (I) is used in molar ratio with respect to the MgCl2 of from 0.01 to 1 preferably from 0.05 to 0.5. The preparation of catalyst components in spherical form is described for example in European patent application EP-A-395083 and in the International patent application WO98144001. The solid catalyst components obtained according to the above method show a surface area (by B.E.T. method) generally between 20 and 500 m21g and preferably between 50 and 400 m21g, and a total porosity (by B.E.T. method) higher than 0.2 cm31g preferably between 0.2 and 0.6 cm31g. The porosity (Hg method) due to pores with radius up to 10.000A generally ranges from 0.3 to 1.5 cm31g, preferably from 0.45 to 1 cm31g.

The organo-aluminum compound is preferably an alkyl-A1 selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$ where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1 , trifluoropropyl-2-ethylpiperidinyl-dimethoxysilane and 1,1,1,trifluoropropylmetildimethoxysilane. The external electron donor compound is used in such an amount to give a molar ratio between the organo-aluminum compound and said electron donor compound of from 0.1 to 500.

The polymerization process can be carried out in gas phase and or in liquid phase, in continuous or batch reactors, such as fluidized bed or slurry reactors. For example, it is possible to carry out the polymerization of the propylene polymer (A) in liquid phase, using liquid propylene as diluent, while the copolymerization stage to obtain the propylene copolymer fraction (B) is carried out in gas phase, without intermediate stages except for the partial degassing of the monomers. Alternatively, all the sequential polymerization stages can be carried out in gas phase. The reaction time, temperature and pressure of the polymerization steps are not critical, however the temperature for the preparation of fraction (A) and (B), that can be the same or different, is usually from 50°C to 120°C. The polymerization pressure preferably ranges from 0.5 to 12 MPa if the polymerization is carried out in gas-phase. The catalytic system can be pre-contacted (pre-polymerized) with small amounts of olefins. The molecular weight of the propylene polymer composition is regulated by using known regulators, such as hydrogen. According to a preferred embodiment, the propylene polymer (A) is produced by a gas-phase polymerization process carried out in at least two interconnected polymerization zones. Said polymerization process is described in the European patent EP 782587.

The process is carried out in a first and in a second interconnected polymerization zone to which propylene and ethylene or propylene and alpha-olefins are fed in the presence of a catalyst system and from which the polymer produced is discharged. The growing polymer particles flow through the first of said polymerization zones (riser) under fast fluidization conditions, leave said first polymerization zone and enter the second of said polymerization zones (downcomer) through which they flow in a densified form under the action of gravity, leave said second polymerization zone and are reintroduced into said first polymerization zone, thus establishing a circulation of polymer between the two polymerization zones. Generally, the conditions of fast fluidization in the first polymerization zone is established by feeding the monomers gas mixture below the point of reintroduction of the growing polymer into said first polymerization zone. The velocity of the transport gas into the first polymerization zone is higher than the transport velocity under the operating conditions and is normally between 2 and 15 m/s In the second polymerization zone, where the polymer flows in densified form under the action of gravity, high values of density of the solid are reached which approach the bulk density of the polymer; a positive gain in pressure can thus be obtained along the direction of flow, so that it becomes possible to reintroduce the polymer into the first reaction zone without the help of mechanical means. In this way, a "loop" circulation is set up, which is defined by the balance of pressures between the two polymerization zones and by the head loss introduced into the system. Optionally, one or more inert gases, such as nitrogen or an aliphatic hydrocarbon, are maintained in the polymerization zones, in such quantities that the sum of the partial pressures of the inert gases is

preferably between 5 and 80% of the total pressure of the gases. The operating parameters such as, for example, the temperature are those that are usual in gas-phase olefin polymerization processes, for example between 50°C and 120°C. The process can be carried out under operating pressure of between 0,5 and 10 MPa, preferably between 1.5 and 6 MPa. Preferably, the various catalyst components are fed to the first polymerization zone, at any point of said first polymerization zone. However, they can also be fed at any point of the second polymerization zone. Molecular weight regulators known in the art, particularly hydrogen, can be used to regulate the molecular weight of the growing polymer.

In the second stage of the particularly preferred polymerization process, the propylene/ethylene copolymer (B) is produced in a conventional fluidized-bed gas-phase reactor in the presence of the polymeric material and the catalyst system coming from the preceding polymerization step. The polymerization mixture is discharged from the downcomer to a gas-solid separator, and subsequently fed to the fluidized-bed gas-phase reactor operating under conventional conditions of temperature and pressure.

The propylene polymer compositions of the present invention can also be obtained by separately preparing the said copolymers (A) and (B), operating with the same catalysts and substantially under the same polymerization conditions as previously illustrated and subsequently mechanically blending said copolymers in the molten state using conventional mixing apparatuses, like twin-screw extruders.

The propylene polymer compositions of the present invention may further comprise additives commonly employed in the polyolefin field, such as antioxidants, light stabilizers, nucleating agents, antiacids, colorants and fillers.

The main application of the propylene polymer compositions of the invention is the production of molded articles, particularly injection-molded items. The injection-molded articles comprising the propylene polymer compositions of the invention have high values of Flexural modulus combined with good impact properties and particularly high elongation at break.

Therefore, according to a further aspect, the present invention according to claim 8 provides pipe systems comprising the polyolefin composition described above Mono- and multi-layer pipes, tubing and fittings are intended within the term of pipe systems.

The pipe systems according to the present invention are particularly suitable to transport fluids, outdoor and indoor, and/or gravity sewerage and their handling during installation is very easy.

The following examples given to illustrate and not to limit the present invention.

Examples

Xylene Soluble Fraction at 25°C: Determined as follows.

2.5 g of polymer and 250 ml of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept in an oven at 80° C under vacuum until constant weight is obtained. The weight percentage of polymer soluble in xylene at room temperature is then calculated.

- Polydispersity Index: Determined at a temperature of 200°C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation:

$$P.I. = 10^5/G_c$$

  in which $G_c$ is the crossover modulus defined as the value (expressed in Pa) at which G'=G" wherein G' is the storage modulus and G" is the loss modulus.
- Melt Flow Rate (MFR): According to ASTM D 1238 - 86 condition L measured at a temperature of 230°C but using a load of 5 kg instead of a load of 2.6 kg.
- Content of ethylene:

Ethylene content has been determined by IR spectroscopy.

The spectrum of a pressed film of the polymer is recorded in absorbance vs. wavenumbers ($cm^{-1}$). The following measurements are used to calculate C2 content:

a) **Area (At)** of the combination absorption bands between 4482 and 3950 $cm^{-1}$ which is used for spectrometric normalization of film thickness.

b) **Area ($A_{C2}$)** of the absorption band due to methylenic sequences ($CH_2$ rocking vibration) after a proper digital subtraction of an isotactic polypropylene (IPP) reference spectrum. The range 660 to 790 $cm^{-1}$ is used for both heterophasic and/or random copolymers.

The ethylene derived units content of component B) has been determined by calculation knowing the total ethylene content and the amount of component B)

- Flexural elastic modulus: According to ISO method 178.
- Tensile modulus: According to ISO 527.
- IZOD impact resistance: According to ISO method 180/1A.
- Notched impact strength (NIS): According to ISO 179/1eA.
- Intrinsic viscosity of the Xylene Soluble fraction (XSIV): Determined in tetrahydronaphthalene at 135°C.
- Elongation at yield and break: Determined according to IS0 527.

Examples 1 and 2

The Ziegler-Natta catalyst was prepared according to the Example 5, lines 48-55 of the European Patent EP728769. Triethylalurninium (TEAL) was used as co-catalyst and dicyclopentyldimethoxysilane (DCPMS)as external donor.

The propylene polymer compositions of the examples were prepared in a two-step polymerization process, wherein the propylene polymer (A) was prepared in the first polymerization step by feeding the monomers and the catalyst system to a gas-phase polymerization reactor comprising two interconnected polymerization zones, a riser and a downcomer, as described in the European Patent EP782587. The polymerization mixture was discharged from said reactor, conveyed to a gas-solid separator and the polymerized material was sent into a conventional gas-phase fluidized-bed reactor where the propylene-ethylene copolymer (B) was produced. The operative conditions are indicated in Table 1.

The polymer particles exiting from the second polymerization step were subjected to a steam treatment to remove the unreacted monomers and dried.

The propylene polymer compositions were added with the following additives Irganox 1010 - 0.2 wt%, Irgafos 168 - 0.1 wt%, Irganox 1330 - 0.1 wt%, Calcium Stearate LQ - 0.0505 wt%, DSTDP - 0.3%, talc HM-04 - 0.6 wt% and WAX - 0.4 wt% and extruded in a twin-screw extruder Berstorff (L/D=33) under the following operating conditions:

Temperature of the feeding section: 190-210°C
Melt temperature: 240°C
Temperature of the die section: 230°C
Flow rate: 16 Kg/h
Rotational speed: 250 rpm

**Table 1**

| **Example** | | **1** | **2** |
|---|---|---|---|
| *ComponentA)* | | | |
| TEAL/external donor | wt/wt | 5 | 4 |
| TEAL/catalyst | wt/wt | 4.8 | 4 |
| Temperature | °C | 80 | 80 |
| Pressure | bar-g | 30 | 30 |
| $C_2/(C_3+C_2)$ Riser | mol/mol | 0.003 | 0.0031 |
| $C_2/(C_3+C_2)$ Downcomer | mol/mol | 0.0011 | 0.0011 |
| $H_2/C_3^-$ riser | mol/mol | 0.21 | 0.045 |
| *Component B (gas phase reactor)* | | | |
| Temperature | °C | 70 | 70 |

(continued)

| Example | | 1 | 2 |
|---|---|---|---|
| Pressure | bar | 16 | 16 |
| Split * | % | 13 | 9 |
| $C_2/C_2+C_3^-$ | mol/mol | 0.35 | 0.357 |
| *Amount of component B with respect to A+B $C_2$= ethylene $C_3$ = propylene | | | |

Comparative Examples 1 and 2

Comparative examples 1 and 2 are examples 2 and 9 of EP 1724289 A

The properties of the compositions obtained according to Examples 1 and 2 and Comparative Examples 1 and 2 are reported in Table 2.

**Table 2**

| Example | | 1 | 2 | Comp 1 | Comp 2) |
|---|---|---|---|---|---|
| **Properties of component A)** | | | | | |
| Content of homopolymer i) | wt% | 60 | 60 | 47 | 52 |
| Content of copolymer ii) | Wt% | 40 | 40 | 53 | 48 |
| $C_2$(A) | wt% | 0.6 | 0.5 | 0.9 | 1.0 |
| XS fraction | Wt% | 2.0 | 2.0 | 2.1 | 2.2 |
| MFR | g/10' | 0.94 | 0.89 | 0.3 | 0.7 |
| Polydispersity Index | | 4.6 | 4.5 | nd | nd |
| **Properties of component B)** | | | | | |
| %copolymer component B)* | wt% | 13.1 | 9.2 | 8.1 | 10.8 |
| $C_2$(B) | wt% | 49 | 49 | 35 | 37 |
| **Properties of the total composition** | | | | | |
| ethylene total content $C_2$(A+B) | wt% | 7 | 4.8 | 4.2 | 5.0 |
| MFR of the composition | g/10' | 0.53 | 0.42 | 0.32 | 0.63 |
| XSIV | dl/g | 3.46 | 3.38 | 3.5 | 3 |
| $x = C_2(B)/C_2(A + B)$ | | 7.0 | 10.21 | 8.33 | 7.40 |
| Y= XS*$C_2$(A) | | 1.20 | 1.00 | 1.89 | 2.20 |
| -0.061 x+2.187 | | 1.76 | 1.56 | 1.68 | 1.74 |
| Flexural Modulus | MPa | 1265 | 1416 | nd | nd |
| Tensile Modulus | MPa | 1256 | 1381 | 1563 | 1440 |
| Izod Impact 23°C | $kJ/m^2$ | 61 | 60.9 | nd | nd |
| Izod Impact 0°C | $kJ/m^2$ | 39.5 | 23.4 | nd | nd |
| Izod Impact-20°C | $kJ/m^2$ | 14.8 | 10.7 | nd | nd |
| Notched Impact -20°C | $kJ/m^2$ | 9.7 | 8.3 | 3 | 3.8 |
| Elongation at break | % | 460 | 53 | nd | nd |
| Stress at break | MPa | 32.9 | 24.4 | nd | nd |
| Stress at yield | MPa | 29.6 | 32.4 | 30.8 | 28.3 |
| Elongation at yield | % | 14.8 | 12.2 | 6.4 | 6 |

(continued)

| Properties of the total composition | | | | | |
|---|---|---|---|---|---|
| nd not determined<br>$C_2$ ethylene derived units<br>* referred to the sum A) + B) | | | | | |

By comparing example 1 of the present invention with comparative examples 1 and 2 it is clear that, when the parameters of the present invention are fulfilled, the Notched impact strenght at low temperatures is improved without any decrease in rigidity properties.

## Claims

1. A polyolefin composition comprising (percent by weight):

A) from 80 wt% to 97 wt% of a propylene polymer composition comprising:

i) from 50 wt% to 70 wt% of a propylene homopolymer; and
ii) from 30 wt% to 50 wt% of a propylene-ethylene copolymer, the sum i)+ii) being 100

said propylene polymer composition A) having;

a) a total content of ethylene derived units referred to the sum of the propylene homopolymer i) and the propylene-ethylene copolymer ii) comprised between 0.1 wt% and 3.0 wt% extremes included;
b) a xylene soluble fraction at 25°C (XS) less than 3.0 wt%; and
c) a Polydispersity Index (P.I.), measured with the reolagy method, having a value comprised between 4.0 and 8.0;

B) from 3 wt% to 20 wt% of a propylene-ethylene copolymer having a content of ethylene derived units comprised from 42 wt% to 60 wt%;
the sum A) + B) being 100 and wherein the ethylene content has been measured by IR spectroscopy
said polyolefin composition having:

a) an intrinsic viscosity, determined in tetrahydronaphthalene at 135°C, of the xylene soluble fraction (XSIV) ranging from 3 to 6 dl/g;
b) a Melt Flow Rate value (MFR, 230°C 5kg, ASTM D 1238 - 86 condition L) ranging from 0.01 to 5 g/10 min; and
c) satisfies the following relation:

$$y \leq -0.061x + 2.187$$

wherein y= XS*$C_2$(A) and

$$x = C_2(B)/C_2(A+B);$$

$C_2$(A) being the amount of ethylene derived units in A); $C_2$(B) the content of ethylene in the copolymer B) and $C_2$(A+B) the total content of ethylene referred to the sum of A) and B) and XS is the solubility in xylene at 25°C of component A.

2. The polyolefin composition according to claim 1 wherein component A) comprises from 55 wt% to 65 wt% of component i) and from 35 wt% to 45 wt% of component ii);

3. The polyolefin composition according to claims 1 or 2 having a Melt Flow Rate value (MFR, 230°C 5kg) ranging

from 0.3 to 1 g/10 min.

4. The polyolefin composition according to any one of claims 1-3 having a flexural modulus (measured according to the method as described in the experimental part) comprised between 900 MPa and 2000 MPa.

5. The polyolefin composition according to any one of claims 1-4 having notched impact strength measured at -20°C higher than 5 kJ/$m^2$ (measured according to the method as described in the experimental part).

6. The polyolefin composition according to any one of claims 1-5 having Izod impact strength measured at -20°C higher than 8 kJ/$m^2$ (measured according to the method as described in the experimental part).

7. A process for the preparation of a polyolefin composition according to any of claim 1 to 6, wherein the copolymer (A) is prepared in at least one first polymerization stage and the copolymer (B) is prepared in at least one second polymerization stage.

8. A pipe system comprising the polyolefin composition of any of claims 1-6.

**Patentansprüche**

1. Polyolefinzusammensetzung, umfassend (in Gewichtsprozent):

A) 80 Gew.% bis 97 Gew.% einer Propylenpolymerzusammensetzung, umfassend:

i) 50 Gew.% bis 70 Gew.% eines Propylenhomopolymers und
ii) 30 Gew.% bis 50 Gew.% eines Propylen-Ethylen-Copolymers, wobei die Summe aus i) + ii) 100 beträgt,

wobei die Propylenpolymerzusammensetzung A) aufweist:

a) einen Gesamtgehalt an von Ethylen abgeleiteten Einheiten, bezogen auf die Summe des Propylenhomopolymers i) und des Propylen-Ethylen-Copolymers ii), zwischen 0,1 Gew.% und 3,0 Gew.%, wobei die Extremwerte eingeschlossen sind;
b) eine xylollösliche Fraktion bei 25 °C (XS) von weniger als 3,0 Gew.%; und
c) einen mit dem Rheologieverfahren gemessenen Polydispersitätsindex (P.I.) mit einem Wert zwischen 4,0 und 8,0;

B) 3 Ges.% bis 20 Ges.% eines Propylen-Ethylen-Copolymers mit einem Gehalt an von Ethylen abgeleiteten Einheiten zwischen 42 Gew.% und 60 Gew.%;
wobei die Summe aus A) + B) 100 beträgt, und wobei der Ethylengehalt durch IR-Spektroskopie gemessen wurde,
wobei die Polyolefinzusammensetzung aufweist:

a) eine in Tetrahydronaphthalin bei 135 °C bestimmte Grenzviskosität der xylollöslichen Fraktion (XSIV) im Bereich von 3 bis 6 dl/g;
b) einen Wert der Schmelzfließrate (MFR, 230 °C 5 kg, ASTM D 1238-86 Bedingung L) im Bereich von 0,01 bis 5 g/10 min; und
c) welche die folgende Beziehung erfüllt:

$$y \leq -0{,}061\ x + 2{,}187$$

wobei y= XS*$C_2$(A) und

$$x = C_2(B)/C_2(A + B),$$

wobei $C_2$ (A) die Menge an von Ethylen abgeleiteten Einheiten in A) ist; $C_2$(B) der Gehalt an Ethylen in dem

Copolymer B) ist und $C_2$(A+B) der Gesamtgehalt an Ethylen ist, bezogen auf die Summe an A) und B), und XS die Löslichkeit von Komponente A in Xylol bei 25 °C ist.

**2.** Polyolefinzusammensetzung nach Anspruch 1, wobei Komponente A) 55 Gew.% bis 65 Gew.% von Komponente i) und 35 Gew.% bis 45 Gew.% von Komponente ii) umfasst.

**3.** Polyolefinzusammensetzung nach den Ansprüchen 1 oder 2 mit einem Wert der Schmelzfließrate (MFR, 230 °C, 5 kg) im Bereich von 0,3 bis 1 g/10 min.

**4.** Polyolefinzusammensetzung nach einem der Ansprüche 1 bis 3 mit einem Biegemodul (gemessen gemäß dem Verfahren wie in dem experimentellen Teil beschrieben) zwischen 900 MPa und 2000 MPa.

**5.** Polyolefinzusammensetzung nach einem der Ansprüche 1 bis 4 mit einer bei -20 °C gemessenen Kerbschlagzähigkeit von mehr als 5 $kJ/m^2$ (gemessen gemäß dem Verfahren wie in dem experimentellen Teil beschrieben).

**6.** Polyolefinzusammensetzung nach einem der Ansprüche 1 bis 5 mit einer bei -20 °C gemessenen Izod-Schlagzähigkeit von mehr als 8 $kJ/m^2$ (gemessen gemäß dem Verfahren wie in dem experimentellen Teil beschrieben).

**7.** Verfahren zur Herstellung einer Polyolefinzusammensetzung nach einem der Ansprüche 1 bis 6, wobei das Copolymer (A) in mindestens einer ersten Polymerisationsstufe hergestellt wird und das Copolymer (B) in mindestens einer zweiten Polymerisationsstufe hergestellt wird.

**8.** Leitungssystem, umfassend die Polyolefinzusammensetzung gemäß einem der Ansprüche 1 bis 6.

## Revendications

**1.** Composition polyoléfinique comprenant (pourcentage en poids) :

A) 80% en poids à 97% en poids d'une composition de polymère de propylène comprenant :

i) 50% en poids à 70% en poids d'un homopolymère de propylène ; et
ii) 30% en poids à 50% en poids d'un copolymère de propylène-éthylène, la somme i)+ii) valant 100

ladite composition de polymère de propylène A) présentant :

a) une teneur totale en unités dérivées d'éthylène, par rapport à la somme de l'homopolymère de propylène i) et du copolymère de propylène-éthylène ii), comprise entre 0,1% en poids et 3,0% en poids, valeurs extrêmes incluses ;
b) une fraction soluble dans le xylène à 25°C (SX) inférieure à 3,0% en poids ; et
c) un indice de polydispersité (IP), mesuré par le procédé de rhéologie, présentant une valeur comprise entre 4,0 et 8,0 ;

B) 3% en poids à 20% en poids d'un copolymère de propylène-éthylène présentant une teneur en unités dérivées d'éthylène dans la plage de 42% en poids à 60% en poids ;
la somme de A) + B) valant 100 et la teneur en éthylène ayant été mesurée par spectroscopie IR
ladite composition polyoléfinique présentant :

a) une viscosité intrinsèque, déterminée dans du tétrahydronaphtalène à 135°C, de la fraction soluble dans le xylène (VISX) dans la plage de 3 à 6 dl/g ;
b) une valeur de l'indice de fluidité à chaud (MFR, 230°C, 5 kg, ASTM D 1238 - 86 condition L) dans la plage de 0,01 à 5 g/10 min ; et
c) satisfaisant à la relation suivante :

$$y \leq -0,061x + 2,187$$

dans laquelle y= SX *$C_2$(A) et

$$x=C_2(B)/C_2(A+B)\ ;$$

$C_2$(A) représentant la quantité d'unités dérivées d'éthylène dans A) ;
$C_2$(B) représentant la teneur en éthylène dans le copolymère B) et
$C_2$(A+B) représentant la teneur totale en éthylène par rapport à la somme de A) et B) et SX représentant la solubilité dans le xylène à 25°C du constituant A.

**2.** Composition polyoléfinique selon la revendication 1, le constituant A) comprenant 55% en poids à 65% en poids du constituant i) et 35% en poids à 45% en poids du constituant ii) ;

**3.** Composition polyoléfinique selon les revendications 1 ou 2, présentant une valeur de l'indice de fluidité à chaud (MFR, 230°C, 5 kg) dans la plage de 0,3 à 1 g/10 min.

**4.** Composition polyoléfinique selon l'une quelconque des revendications 1-3, présentant un module de flexion (mesuré selon le procédé tel que décrit dans la partie expérimentale) compris entre 900 MPa et 2000 MPa.

**5.** Composition polyoléfinique selon l'une quelconque des revendications 1-4, présentant une résistance aux chocs sur barreau entaillé, mesurée à -20°C, supérieure à 5 kJ/$m^2$ (mesurée selon le procédé tel que décrit dans la partie expérimentale).

**6.** Composition polyoléfinique selon l'une quelconque des revendications 1-5, présentant une résistance aux chocs Izod, mesurée à -20°C, supérieure à 8 kJ/$m^2$ (mesurée selon le procédé tel que décrit dans la partie expérimentale).

**7.** Procédé pour la préparation d'une composition polyoléfinique selon l'une quelconque des revendications 1 à 6, le copolymère (A) étant préparé dans au moins un premier étage de polymérisation et le copolymère (B) étant préparé dans au moins un deuxième étage de polymérisation.

**8.** Système de tuyau comprenant la composition polyoléfinique selon l'une quelconque des revendications 1-6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1724289 A
- US 2009304968 A
- US 2010021666 A
- US 2008214704 A
- EP 2145923 A
- EP 45977 A
- EP 361494 A
- EP 728769 A
- EP 1272533 A
- WO 00163261 A
- US 4399054 A
- US 4469648 A
- EP 395083 A
- WO 98144001 A
- EP 782587 A